# FASCICULE DE BREVET EUROPEEN

(11) **EP 2 771 598 B1**
(45) Date de publication et mention de la délivrance du brevet: **30.12.2015**
(21) Numéro de dépôt: 12787807.2
(22) Date de dépôt: 23.10.2012
(51) Int. Cl.: F16K 5/06, F16K 5/20, F16K 27/06

(54) **ROBINET D'ISOLEMENT**
ISOLIERVENTIL
ISOLATING VALVE

(30) Priorité: 25.10.2011 FR 1159649
(43) Date de publication de la demande: 03.09.2014
(73) Titulaire: Total SA, 92400 Courbevoie (FR)
(72) Inventeur: MALNOU, Dominique, F-64230 Poey De Lescar (FR)
(74) Mandataire: Hirsch & Associés
(86) Numéro de dépôt international: PCT/FR2012/052425
(87) Numéro de publication internationale: WO 2013/060979

(56) Documents cités:
- WO-A1-2004/083693
- WO-A1-2006/024860
- US-A- 2 948 553

## Description

La présente invention concerne un robinet d'isolement, destiné notamment à équiper une cuve de stockage de gaz liquéfié.

Une cuve de stockage de gaz comporte classiquement des moyens d'isolement permettant d'empêcher tout écoulement de gaz hors de la cuve. A cet effet, il est connu d'équiper la cuve avec un clapet mobile monté dans une conduite d'extraction de gaz et bloqué par une goupille thermo-fusible. En fonctionnement normal, le clapet est maintenu par la goupille dans une position dans laquelle il n'entrave pas l'écoulement du gaz liquéfié. En cas de feu, la goupille cède et libère le clapet qui vient bloquer l'écoulement du gaz. En pratique, un tel clapet permet uniquement de limiter l'écoulement de gaz mais ne permet pas d'assurer une étanchéité totale. Une vanne est donc ajoutée en aval du clapet, cette vanne assurant la fonction d'étanchéité même lorsqu'elle est soumise à de fortes températures en cas de feu. Cette vanne présente les inconvénients suivants.

Tout d'abord, une vanne est conçue pour contrôler le débit de fluide au travers d'une canalisation et non pour assurer une fonction d'isolement. En conséquence, l'étanchéité d'une telle vanne n'est en général pas parfaitement assurée.

En outre, l'actionnement d'une telle vanne, même si elle est motorisée, est relativement long. En effet, la vanne est actionnée par la rotation d'un arbre et le passage de la position complètement ouverte à la position complètement fermée nécessite plusieurs tours.

Il est par ailleurs connu d'utiliser, pour des applications différentes, des robinets d'isolement offrant une bonne étanchéité, tels en particulier que les robinets de type « Double Block and Bleed » ou DBB, décrits notamment dans les documents EP 1 618 325, WO 2004/083693 et WO 2010/131039.

Un robinet de ce type comporte classiquement un corps comprenant un canal de passage de fluide, destiné à être obturé par des tournants sphériques amont et aval, actionnables indépendamment l'un de l'autre entre des positions de passage du fluide au travers dudit canal et des positions d'obturation du canal. Le corps est en outre équipé de moyens de purge débouchant dans le canal précité, entre les tournants amont et aval.

L'utilisation de deux moyens d'isolement en série, formés par les tournant amont et aval, permet de garantir que du fluide ne s'échappe pas, même en cas de défaillance de l'un des moyens d'isolement.

Les moyens de purge permettent de vérifier la bonne étanchéité des tournants. Pour cela, il suffit de fermer les tournants, de purger une première fois la partie du canal située entre les deux tournants, puis de vérifier par une seconde purge qu'à l'issue d'une durée déterminée, aucun fluide ne s'est échappé en aval du tournant amont.

Le robinet de type « Double Block and Bleed » comporte en outre, pour chaque tournant amont et aval, un siège amont et un siège aval, associés à des moyens de rappel élastique de façon à venir en appui étanche contre les tournants sphériques autour du canal de passage de fluide.

Un tel robinet comporte plusieurs volumes morts, c'est-à-dire des volumes confinés susceptibles d'emprisonner du fluide.

Dans le cas où les deux tournants sont en position d'obturation, un premier volume mort est formé dans le canal de passage de fluide, entre les tournants amont et aval.

Un second volume mort est formé par un volume externe au canal précité, situé entre la paroi externe du tournant amont et le corps. Le second volume mort comporte également le volume interne du tournant amont qui, en position d'obturation du tournant amont, communique avec le volume externe précité.

Enfin, un troisième volume mort est formé par un volume externe au canal précité, situé entre la paroi externe du tournant aval et le corps. Le troisième volume mort comporte également le volume interne du tournant aval qui, en position d'obturation du tournant aval, communique avec le volume externe précité.

En cas de feu, le gaz emprisonné dans ces volumes morts se dilate et peut provoquer la fissuration, voire l'explosion du corps du robinet, provoquant la ruine complète du robinet.

Le gaz peut alors s'échapper par les fissures créées, alimentant ainsi le feu en combustible.

Afin de permettre l'échappement du gaz contenu dans les deuxième et troisième volumes morts, les sièges des tournants amont et aval peuvent être du type « Simple Piston Effect » ou SPE.

Dans ce cas, les sièges sont conçus pour se décoller des tournants correspondants en cas de surpression dans les volumes morts.

Une telle conception présente les inconvénients suivants.

Tout d'abord, du gaz peut s'échapper à l'extérieur, vers l'aval, par décollement du siège aval par rapport au tournant aval. Même s'il s'agit d'un volume de gaz limité (correspondant au troisième volume mort), ce gaz vient tout de même alimenter le feu en combustible.

En outre, les sièges ne permettent pas d'évacuer le gaz contenu dans le premier volume mort, situé entre les tournants amont et aval, la dilatation de ce gaz pouvant entraîner, comme indiqué précédemment, des fissures ou l'explosion du corps du robinet.

L'invention a notamment pour but d'apporter une solution simple, efficace et économique à ce problème.

A cet effet, elle propose un robinet d'isolement comportant un corps comprenant un canal de passage de fluide, destiné à être obturé par des tournants sphériques amont et aval, actionnables indépendamment l'un de l'autre entre des positions de passage du fluide au travers dudit canal et des positions d'obturation du canal, et des moyens de vérification d'étanchéité, débouchant dans ledit canal entre les deux tournants sphériques, les tournants sphériques étant équipés de sièges associés à des moyens de rappel élastique de façon à venir en appui étanche contre les tournants sphériques autour dudit canal, un volume mort étant délimité entre la paroi externe de chaque tournant sphérique et le corps, à l'extérieur du canal de passage de fluide, chaque siège étant destiné à être soumis d'une part à la pression du fluide situé dans ledit canal et, d'autre part, à la pression du fluide contenu dans le volume mort, caractérisé en ce que le tournant sphérique amont est équipé d'un siège amont et est dépourvu de siège aval, le tournant sphérique aval étant équipé d'un siège amont et d'un siège aval, les sièges amont étant aptes à s'écarter des tournants sphériques en cas de surpression à l'intérieur des volumes morts correspondants, le siège aval étant conçu pour rester en appui étanche sur le tournant sphérique aval en cas de surpression à l'intérieur du volume mort correspondant.

De cette manière, en cas de surpression à l'intérieur des volumes morts, par exemple si le robinet est soumis à un feu, le gaz contenu dans chacun des volumes morts peut s'échapper vers l'amont sans risquer de fissurer le corps. En outre, le gaz ne peut normalement pas s'échapper vers l'aval, de sorte qu'il ne peut pas alimenter le feu.

Avantageusement, le siège amont du tournant amont comporte une surface annulaire en portion de sphère ou tronconique, destinée à venir en contact de manière étanche avec le tournant amont et recouverte, au moins en partie, d'une couche de carbure de tungstène.

Le fluide destiné à traverser le robinet peut présenter des impuretés ou des particules abrasives qui risquent endommager le siège et affecter l'étanchéité entre le siège et le tournant sphérique, en particulier lorsque le tournant est actionné.

La couche de carbure de tungstène présente une dureté élevée qui protège le siège amont. Le dépôt de carbure de tungstène a toutefois un coût important. Il est donc préférentiellement réservé au siège qui est le plus soumis à ce type d'endommagement, c'est-à-dire au siège amont du tournant amont.

Selon une caractéristique de l'invention, le siège amont et/ou le siège aval du tournant aval comportent des inserts annulaires destinés à venir en appui de manière étanche contre le tournant aval.

De tels inserts sont moins résistants aux impuretés et aux particules abrasives mais ils assurent la fonction d'étanchéité à moindre coût. Ces inserts peuvent être en polymère.

De préférence, le siège amont et/ou le siège aval du tournant aval comportent en outre une surface annulaire en portion de sphère ou tronconique, apte à venir en contact de manière étanche contre le tournant aval, en cas de dégradation des inserts.

De cette manière, même en cas de dégradation des inserts, l'étanchéité est assurée entre les sièges correspondants et le tournant aval. Une telle dégradation peut provenir soit d'une usure, soit d'une élévation de la température due à un feu.

Selon une autre caractéristique de l'invention, les sièges amont des tournants amont et aval sont mobiles en translation par rapport au corps, le long d'un axe longitudinal, chaque siège amont comportant une première et une seconde surfaces, tournées respectivement du côté opposé au tournant et du côté du tournant, destinées à être soumises à la pression du fluide du volume mort de sorte que cette pression s'appliquant sur la première surface tend à appliquer le siège sur le tournant et que cette pression s'appliquant sur la seconde surface tend à décoller le siège du tournant, la projection de la seconde surface sur un plan perpendiculaire à l'axe longitudinal étant plus importante que la projection de la première surface sur ledit plan perpendiculaire, de sorte que l'effort résultant appliqué par la pression du fluide du volume mort sur le siège tend à le décoller du tournant correspondant.

Les sièges amont sont donc tous les deux du type « Simple Piston Effect » ou SPE, et permettent au gaz contenu dans les volumes mort et soumis à une surpression, de s'échapper vers l'amont.

De manière avantageuse, le siège aval du tournant aval est mobile en translation par rapport au corps, le long d'un axe longitudinal et comporte une première et une seconde surfaces, tournées respectivement du côté opposé au tournant aval et du côté du tournant aval, destinées à être soumises à la pression du fluide du volume mort de sorte que cette pression s'appliquant sur la première surface tend à appliquer le siège sur le tournant aval et que cette pression s'appliquant sur la seconde surface tend à décoller le siège du tournant aval, la projection de la première surface sur un plan perpendiculaire à l'axe longitudinal étant plus importante que celle de la seconde surface de sorte que l'effort résultant appliqué par la pression du fluide du volume mort sur le siège aval tend à le plaquer contre le tournant aval.

Le siège aval équipant le tournant aval est du type « Double Piston Effect » ou DPE, et évite normalement que du gaz s'échappe vers l'aval.

Le robinet peut comporter au moins un joint annulaire assurant l'étanchéité entre chaque siège amont et le corps, le joint étant logé dans une gorge annulaire du corps ou du siège amont.

De cette manière, la pression du fluide contenu dans le volume mort correspondant et qui pénètre dans la gorge, s'applique d'une part sur la surface du joint et, d'autre part, sur la surface de la gorge opposée au joint. Les projections de ces surfaces étant identiques, les efforts qui en résultent s'annulent. En d'autres termes, une telle structure permet de réduire la partie active de la première surface du siège amont, de manière à réduire l'effort tendant à plaquer le siège contre le tournant correspondant. Ainsi, au final, l'effort résultant de la pression du fluide sur les première et seconde surfaces, tend à écarter le siège amont du tournant correspondant.

En outre, le robinet peut comporter au moins un joint annulaire assurant l'étanchéité entre le siège aval du tournant aval et le corps, le joint étant monté dans un espace annulaire délimité entre une paroi externe cylindrique du siège et une paroi interne cylindrique du corps, de plus grand diamètre que la paroi externe du siège.

Une telle structure a pour effet d'augmenter la seconde surface du siège aval, par rapport à la première surface, de sorte que l'effort résultant tend à plaquer le siège aval contre le tournant aval en cas de surpression à l'intérieur du volume mort correspondant.

De manière préférentielle, les moyens de vérification d'étanchéité comportent des moyens de purge débouchant dans la section du canal de passage de fluide située entre les tournants sphériques amont et aval.

L'invention concerne en outre une cuve de stockage de gaz, notamment de gaz liquéfié, comportant une conduite d'extraction du gaz contenu dans la cuve, caractérisé en ce que la conduite d'extraction comporte un robinet du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe d'un robinet de type « Double Block and Bleed » de l'art antérieur,
- la figure 2 est une vue partielle et en coupe longitudinale illustrant schématiquement le fonctionnement de sièges de type « Simple Piston Effect » équipant un tournant sphérique, selon l'art antérieur,
- la figure 3 est une vue partielle et en coupe longitudinale illustrant schématiquement le fonctionnement de sièges de type « Double Piston Effect » équipant un tournant sphérique, selon l'art antérieur,
- la figure 4 est une vue de face d'un robinet selon l'invention,
- la figure 5 est une vue de côté du robinet de la figure 4,
- la figure 6 est une vue en coupe longitudinale du robinet de la figure 4,
- la figure 7 est une vue de détail illustrant la structure du siège amont du tournant amont,
- la figure 8 est une vue correspondant sensiblement à la figure 7, illustrant schématiquement le fonctionnement du siège amont du tournant amont,
- la figure 9 est une vue de détail illustrant la structure du siège amont du tournant aval,
- la figure 10 est une vue correspondant sensiblement à la figure 9, illustrant schématiquement le fonctionnement du siège amont du tournant aval,
- la figure 11 est une vue de détail illustrant la structure du siège aval du tournant aval,
- la figure 12 est une vue correspondant sensiblement à la figure 11, illustrant schématiquement le fonctionnement du siège aval du tournant aval,
- la figure 13 est une vue de détail illustrant la structure des moyens de purge.

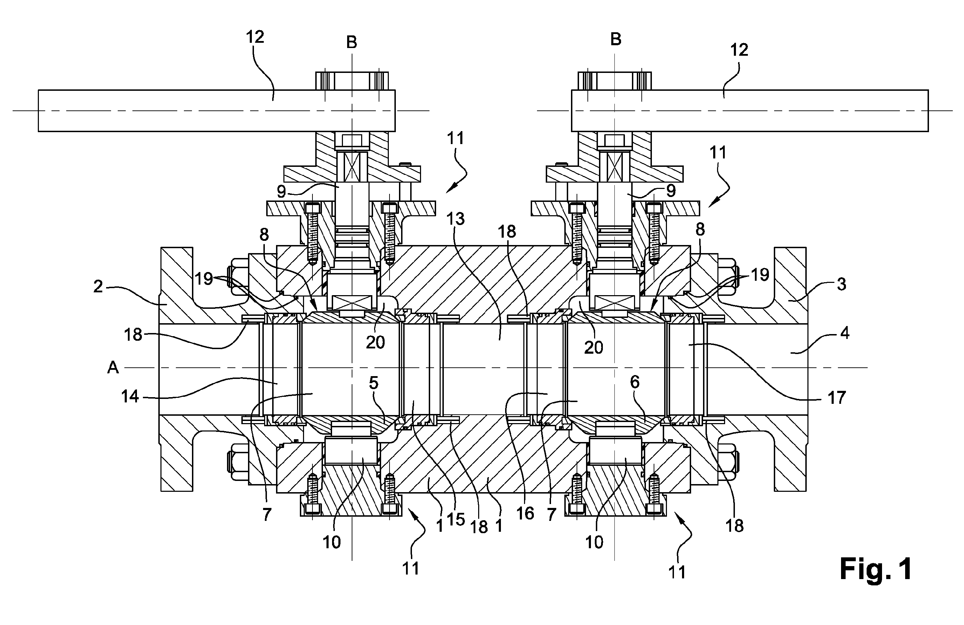

Un robinet de type « Double Block and Bleed » ou DBB, selon l'art antérieur, est représenté à la figure 1. Il correspond à celui décrit dans le document WO 2010/131039 et comporte un corps 1 comprenant une extrémité amont sur laquelle est fixé un premier embout à bride 2, destiné à être raccordé par exemple à une canalisation d'extraction de gaz d'une cuve de stockage de gaz liquéfié, et une extrémité aval sur laquelle est fixé un second embout à bride 3, pouvant être déconnecté de toute conduite et donc laissé à l'air libre. Le corps 1 et les brides 2, 3 comportent un canal de passage de fluide 4 s'étendant suivant l'axe longitudinal A du robinet.

Des tournants sphériques amont et aval 5, 6 sont montés dans le corps 1, chaque tournant 5, 6 comportant un trou cylindrique central 7 traversant et une surface externe sphérique 8. Chaque tournant 5, 6 est monté autour d'un axe B formé d'un arbre supérieur 9 et d'un arbre inférieur 10, montés dans des paliers étanches 11 du corps 1. Des moyens d'actionnement tels que des poignées 12 ou des volants sont fixées sur les arbres supérieurs 9. Chaque tournant 5, 6 peut ainsi être actionné indépendamment, par pivotement d'un quart de tour de la poignée 12 ou du volant d'actionnement, entre une position de passage du fluide (figure 1) dans laquelle le trou cylindrique 7 du tournant 5, 6 s'étend dans le prolongement du canal 4, et une position d'obturation (non représentée) dans laquelle le trou cylindrique 7 du tournant 5, 6 s'étend perpendiculairement au canal 4.

Le robinet comporte de plus des moyens de purge (non visible sur la figure 1) débouchant, d'une part, dans la section 13 du canal 4 de passage de fluide située entre les tournants sphériques amont et aval 5, 6 et, d'autre part, au niveau de la surface externe du corps 1.

Chaque tournant 5, 6 est en outre équipé d'un siège amont 14, 16 et d'un siège aval 15, 17 se présentant sous la forme de bagues logées dans le corps 1 et dont les parois internes s'étendent sensiblement dans le prolongement du canal 4. Les sièges 14, 15, 16, 17 sont mobiles en translation suivant l'axe longitudinal A, par rapport au corps 1. Chaque siège 14, 15, 16, 17 comporte une extrémité soumise à l'effort de ressorts de rappel 18, et une autre extrémité venant en appui étanche contre la surface externe 8 du tournant 5, 6. Des joints d'étanchéité sont en outre prévus entre le corps 1 et les sièges 14, 15, 16, 17.

Lorsque les tournants 5, 6 sont en position ouverte, c'est-à-dire dans la position permettant le passage de fluide au travers du robinet, plus précisément au travers du canal 4, le fluide peut s'écouler librement de l'amont vers l'aval, le fluide étant empêché de s'écouler au travers des différents plans de jonction par des joints 19.

Dans cette position, des volumes morts 20, dans lesquels peut être confiné du gaz, sont formés à l'extérieur du canal 4, entre le corps 1 et les parois externes 8 des tournants amont et aval 5, 6.

Lorsque les deux tournants 5, 6 sont en position fermée, c'est-à-dire en position d'obturation, le robinet comporte un premier volume mort 13 formé dans le canal 4 de passage de fluide, entre les tournants amont et aval 5, 6.

Un second volume mort est formé par le volume 20 externe au canal 4, situé entre la paroi externe 8 du tournant amont 5 et le corps 1. Le second volume mort comporte également le volume interne 7 du tournant amont 5 qui, en position fermée du tournant amont 5, communique avec le volume externe 20 précité.

Enfin, un troisième volume mort est formé par le volume 20 externe au canal 4, situé entre la paroi externe 8 du tournant aval 6 et le corps 1. Le troisième volume mort comporte également le volume interne 7 du tournant aval 6 qui, en position fermée du tournant aval 6, communique avec le volume externe 20 précité.

Comme indiqué précédemment, aussi bien en position ouverte qu'en position fermée des tournants 5, 6, le gaz emprisonné dans les volumes morts se dilate en cas de feu et peut provoquer la fissuration, voire l'explosion du corps 1 du robinet. Le gaz peut alors s'échapper par les fissures créées, alimentant ainsi le feu en combustible.

Dans l'art antérieur, il est connu d'équiper les tournants 5, 6, soit avec des sièges de type « Simple Piston Effect », soit avec des sièges de type « Double Piston Effect ».

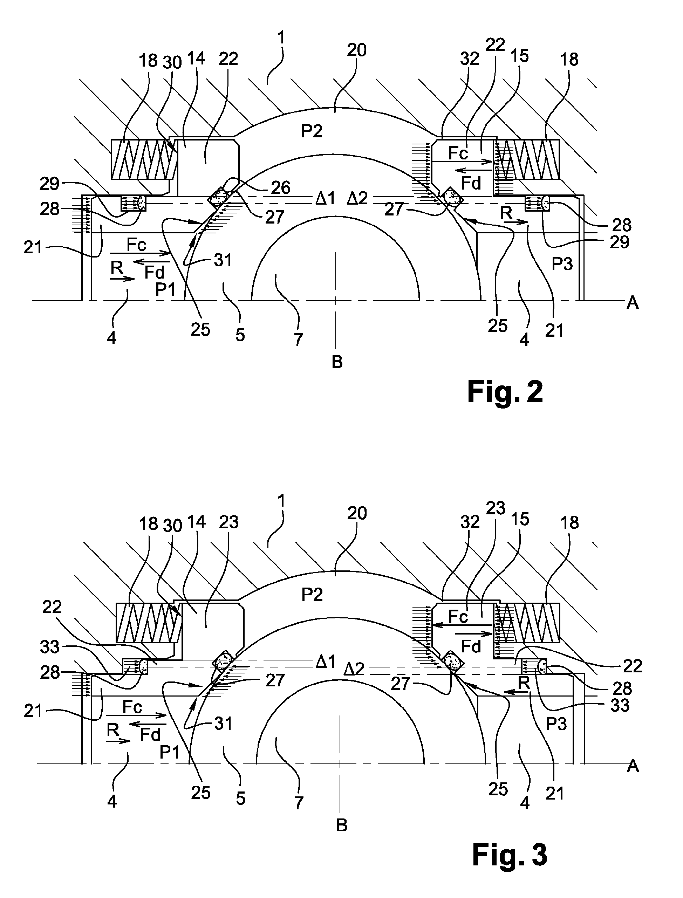

La figure 2 représente un tournant sphérique 5 équipé de sièges amont et aval 14, 15 de type « Simple Piston Effect » ou SPE.

Dans cet exemple, le siège amont 14 comporte, de l'amont vers l'aval, une première partie cylindrique 21 et une seconde partie cylindrique 22 de diamètre supérieur à la première partie 21. La face d'extrémité aval du siège 14 comporte une portion tronconique 25 dans laquelle est prévue une gorge annulaire 26 de montage d'un joint annulaire d'étanchéité 27, destiné à être plaqué de manière étanche contre la surface externe 8 du tournant sphérique 14. Un joint torique 28 est en outre monté dans une gorge 29 de la première partie 21 du siège 14, et assure l'étanchéité entre le siège 14 et le corps 1.

La face amont 30 de la deuxième partie 22 forme un épaulement contre lequel viennent s'appuyer des ressorts 18 montés dans des logements du corps 1. Les ressorts 18 exercent des efforts orientés longitudinalement, de façon à plaquer le siège amont 14 contre le tournant 5.

Le tournant 5 est également équipé d'un siège aval 15, dont la structure est symétrique à celle du siège amont 14, par rapport à l'axe B de pivotement du tournant 5.

Le fonctionnement des sièges amont et aval 14, 15 de type « Simple Piston Effect » est le suivant.

On suppose que le joint annulaire 27 du siège amont 14 s'est dégradé de sorte qu'il n'assure plus complètement sa fonction d'étanchéité, une fuite de fluide se produisant du canal 4 vers le volume mort 20. La pression P1 dans le canal 4 en amont du siège amont 14 est supérieure à celle P2 dans le volume mort 20, qui elle-même est plus importante que celle P3 du canal 4 en aval du siège aval 15.

Compte tenu de la position des différents joints 27, 28 et de la forme du siège 14, le fluide pénètre à l'intérieur de la gorge 29 et dans l'espace annulaire 31 situé entre la portion tronconique 25 du siège amont 14 et la surface externe 8 du tournant 5.

Ainsi, en amont du tournant 5, le fluide exerce une pression P1 sur toutes les faces du siège amont 14 avec lesquelles il est en contact, directement ou indirectement (par exemple par l'intermédiaire du joint 28). On négligera dans la suite de la description les pertes de charge ainsi que les efforts exercés par les ressorts 18, afin de faciliter la compréhension.

On désignera par première surface, la ou les surfaces soumises à la pression P1 du fluide, directement ou indirectement (par exemple par l'intermédiaire du joint 28), et tournées du côté opposé au tournant sphérique 5, et par seconde surface, la ou les surfaces soumises à la pression P1, directement ou indirectement, et tournées du côté du tournant sphérique 5.

La pression P1 s'exerçant sur la première surface du siège amont 14 génère un effort Fc orienté suivant l'axe longitudinal A et tendant à plaquer le siège amont 14 contre le tournant sphérique 5 alors que, au contraire, la pression P1 s'exerçant sur la seconde surface du siège amont 14 génère un effort Fd orienté suivant l'axe A et tendant à décoller le siège amont 14 du tournant sphérique 5. L'effort Fc est dépendant de la projection de la première surface sur le plan perpendiculaire à l'axe A et l'effort Fd est dépendant de la projection de la seconde surface sur le plan perpendiculaire précité.

Dans le cas de la figure 2, la projection de la première surface sur le plan perpendiculaire à l'axe A est supérieure à la projection de la seconde surface sur le plan perpendiculaire à l'axe A (comme cela est visible sur la figure 2, la différence entre ces deux projections étant notée Δ1), de sorte que la valeur (norme du vecteur) de l'effort Fc est supérieure à celle de l'effort Fd, la force résultante R étant dirigée de l'amont vers l'aval et tendant à plaquer le siège amont 14 contre le tournant sphérique 5.

En d'autres termes, du fait de la géométrie particulière du siège amont 14, la pression P1 s'exerçant sur les première et seconde surfaces tend à plaquer le siège amont 14 contre le tournant sphérique 5.

En outre, compte tenu de la position des différents joints 27, 28 et de la forme du siège aval 15, le fluide issu du volume mort 20 à la pression P2 pénètre dans l'interstice 32 situé entre le corps 1 et le siège aval 15, dans les logements des ressorts 18 du siège aval, et dans la gorge 29 logeant le joint 28 du siège aval 15.

Comme précédemment, on désigne par première surface, la ou les surfaces du siège aval 15 soumises à la pression P2 du fluide, directement ou indirectement, et tournées du côté opposé au tournant sphérique 5, et par seconde surface, la ou les surfaces du siège aval soumises à la pression P2, directement ou indirectement (par exemple par l'intermédiaire du joint 28), et tournées du côté du tournant sphérique 5.

La pression P2 s'exerçant sur la première surface du siège aval 15 génère un effort Fc orienté suivant l'axe longitudinal A et tendant à plaquer le siège aval 15 contre le tournant sphérique 5 alors que, au contraire, la pression P2 s'exerçant sur la seconde surface génère un effort Fd orienté suivant l'axe A et tendant à décoller le siège aval 15 du tournant sphérique 5.

Dans le cas de la figure 2, pour le siège aval 15, la projection de la première surface sur le plan perpendiculaire à l'axe A est inférieure à la projection de la seconde surface sur le plan perpendiculaire à l'axe A (comme cela est visible sur la figure 2, la différence entre ces deux projections étant notée Δ2), de sorte que la valeur (norme du vecteur) de l'effort Fc est inférieure à celle de l'effort Fd, la force résultante R étant dirigée de l'amont vers l'aval.

En d'autres termes, du fait de la géométrie particulière du siège aval 15, la pression P2 s'exerçant sur les première et seconde surfaces tend à décoller le siège aval 15 du tournant sphérique 5.

On rappelle que la pression P3 est inférieure à la pression P2, elle-même inférieure à la pression P1 de sorte que l'effet de la pression P3 sur le siège aval 15 est négligeable et que l'effet de la pression P2 sur le siège amont 14 est également négligeable.

On remarque ainsi que les sièges 14, 15 de type « Simple Piston Effect » ou SPE sont, en fonctionnement normal, plaqués contre le tournant correspondant 5 mais s'ouvrent en cas de surpression dans le volume mort 20, de manière à laisser s'échapper le fluide du volume mort 20 vers le canal 4.

La figure 3 représente un tournant sphérique 5 équipé de sièges amont et aval 14, 15 de type « Double Piston Effect » ou DPE.

Dans cet exemple, le siège amont 14 comporte, de l'amont vers l'aval, une première partie cylindrique 21, une seconde partie cylindrique 22 de diamètre supérieur à celui de la première partie 21, et une troisième partie cylindrique 23 de diamètre supérieur à celui de la seconde partie 22. La face d'extrémité aval du siège amont 14 comporte une portion tronconique 25 dans laquelle est prévue une gorge annulaire 26 de montage d'un joint annulaire d'étanchéité 27, destiné à être plaqué de manière étanche contre la surface externe 8 du tournant sphérique 5. Un joint torique 28 est en outre monté autour de la première partie 21 du siège amont 14, dans un espace annulaire 33 délimité entre la surface externe de la première partie 21 du siège 14 et une surface interne cylindrique du corps 1, de diamètre sensiblement identique à celui de la deuxième partie 22 du siège 14. Ce joint torique 28 assure l'étanchéité entre le siège amont 14 et le corps 1.

La face amont de la troisième partie 23 forme un épaulement 30 contre lequel viennent s'appuyer des ressorts 18 montés dans des logements du corps 1. Les ressorts 18 exercent des efforts orientés longitudinalement, de façon à plaquer le siège amont 14 contre le tournant 5.

Le tournant 5 est également équipé d'un siège aval 15, dont la structure est symétrique à celle du siège amont 14, par rapport à l'axe B de pivotement du tournant 14.

Le fonctionnement des sièges de type « Double Piston Effect » est le suivant.

On suppose que le joint annulaire 27 du siège amont 14 s'est dégradé de sorte qu'il n'assure plus complètement sa fonction d'étanchéité, une fuite de fluide se produisant du canal 4 vers le volume mort 20. La pression P1 dans le canal 4 en amont du siège amont 14 est supérieure à celle P2 dans le volume mort 20, qui elle-même est plus importante que celle P3 du canal 4 en aval du siège aval 15.

Compte tenu de la position des différents joints 27, 28 et de la forme du siège amont 14, le fluide pénètre à l'intérieur de l'espace annulaire 33 entourant la première partie 21 du siège amont 14 et dans l'espace annulaire 31 situé entre la portion tronconique 25 du siège amont 14 et la surface externe 8 du tournant 5.

Ainsi, en amont du tournant 5, le fluide exerce une pression P1 sur toutes les faces du siège amont 14 avec lesquelles il est en contact, directement ou indirectement (par exemple par l'intermédiaire du joint 28). On négligera dans la suite de la description les pertes de charge ainsi que les efforts exercés par les ressorts 18, afin de faciliter la compréhension.

On désignera par première surface, la ou les surfaces du siège amont 14 soumises à la pression P1 du fluide, directement ou indirectement (par exemple par l'intermédiaire du joint 28), et tournées du côté opposé au tournant sphérique 5, et par seconde surface, la ou les surfaces soumises à la pression P1, directement ou indirectement, et tournées du côté du tournant sphérique 5.

La pression P1 s'exerçant sur la première surface génère un effort Fc orienté suivant l'axe longitudinal A et tendant à plaquer le siège amont 14 contre le tournant sphérique 5 alors que, au contraire, la pression P1 s'exerçant sur la seconde surface génère un effort Fd orienté suivant l'axe A et tendant à décoller le siège amont 14 du tournant sphérique 5. L'effort Fc est dépendant de la projection de la première surface sur le plan perpendiculaire à l'axe A et l'effort Fd est dépendant de la projection de la seconde surface sur le plan perpendiculaire précité.

Dans le cas de la figure 3, pour le siège amont 14, la projection de la première surface sur le plan perpendiculaire à l'axe A est supérieure à celle de la seconde surface (comme cela est visible à la figure 3, la différence entre ces deux projections étant notée Δ1), de sorte que la valeur (norme du vecteur) de l'effort Fc est supérieure à celle de l'effort Fd, la force résultante R étant dirigée de l'amont vers l'aval et tendant à plaquer le siège amont 14 contre le tournant sphérique 5.

En d'autres termes, du fait de la géométrie particulière du siège amont 14, la pression P1 s'exerçant sur les première et seconde surfaces tend à plaquer le siège amont 14 contre le tournant sphérique 5.

En outre, compte tenu de la position des différents joints 27, 28 et de la forme du siège aval 15, le fluide issu du volume mort 20 à la pression

P2 pénètre dans l'interstice 32 situé entre le corps 1 et le siège aval 15, dans les logements des ressorts 18, et dans l'espace annulaire 33 situé entre la première partie 21 du siège aval 15 et le corps 1.

Pour le siège aval 15, on désigne par première surface, la ou les surfaces soumises à la pression P2 du fluide, directement ou indirectement, et tournées du côté opposé au tournant sphérique 5, et par seconde surface, la ou les surfaces soumises à la pression P2, directement ou indirectement, et tournées du côté du tournant sphérique 5.

Pour le siège aval 15, la pression P2 s'exerçant sur la première surface génère un effort Fc orienté suivant l'axe longitudinal A et tendant à plaquer le siège aval 15 contre le tournant sphérique 5 alors que, au contraire, la pression P2 s'exerçant sur la seconde surface génère un effort Fd orienté suivant l'axe A et tendant à décoller le siège aval 15 du tournant sphérique 5.

Dans le cas de la figure 3, pour le siège aval 15, la projection de la première surface sur le plan perpendiculaire à l'axe A est supérieure à celle de la seconde surface de sorte que la valeur (norme du vecteur) de l'effort Fc est supérieure à celle de l'effort Fd, la force résultante R étant dirigée de l'aval vers l'amont.

En d'autres termes, du fait de la géométrie particulière du siège aval 15, la pression P2 s'exerçant sur les première et seconde surfaces tend à plaquer le siège aval 15 contre le tournant sphérique 5.

On rappelle que la pression P3 est inférieure à la pression P2, elle-même inférieure à la pression P1 de sorte que l'effet de la pression P3 sur le siège aval 15 est négligeable et que l'effet de la pression P2 sur le siège amont 14 est également négligeable.

On remarque ainsi que les sièges 14, 15 de type « Double Piston Effect » ou DPE sont, en fonctionnement normal, plaqués contre le tournant correspondant 5, et ne s'ouvrent pas en cas de surpression dans le volume mort 20, le fluide restant ainsi emprisonné à l'intérieur du volume mort 20 sans possibilité de s'échapper.

Comme indiqué précédemment, l'utilisation d'un robinet de type « Double Block and Beed » selon l'art antérieur, comportant quatre sièges de type de « Simple Piston Effect » ou quatre sièges de type « Double Piston Effect », n'est pas envisageable lorsque ce robinet doit résister au feu. En effet, en cas de feu, la construction du robinet ne permet pas au gaz sous pression de s'échapper de tous les volumes morts, de sorte qu'il existe un risque de fissuration ou d'explosion du corps du robinet.

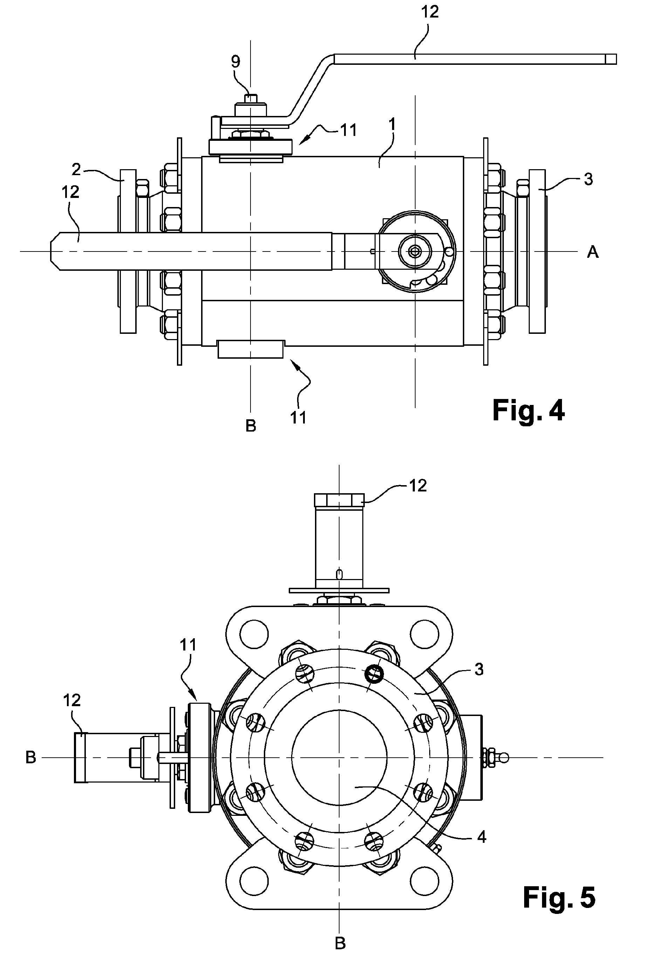

Les figures 4 à 6 illustrent un robinet selon l'invention, de type « Double Block and Bleed » ou DBB. Celui-ci comporte un corps 1 comprenant une extrémité amont sur laquelle est fixé un premier embout à bride 2, destiné à être raccordé par exemple à une canalisation d'extraction de gaz d'une cuve de stockage de gaz liquéfié, et une extrémité aval sur laquelle est fixé un second embout à bride 3, pouvant être déconnecté de toute conduite et donc laissé à l'air libre. Le corps 1 et les brides 2, 3 comportent un canal 4 de passage de fluide s'étendant suivant l'axe longitudinal A du robinet.

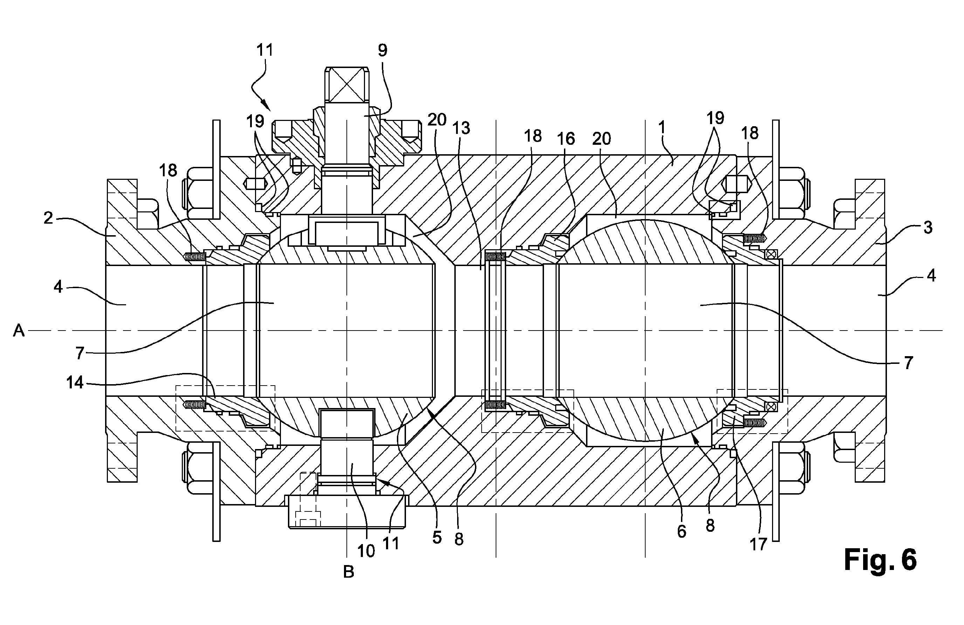

Des tournants sphériques amont et aval 5, 6 sont montés dans le corps1, chaque tournant 5, 6 comportant un trou cylindrique central 7 traversant et une surface externe sphérique 8. Chaque tournant 5, 6 est monté autour d'un axe B formé d'un arbre supérieur 9 et d'un arbre inférieur 10, montés dans des paliers étanches 11 du corps 1. Des moyens d'actionnement tels que des poignées ou des volants sont montés sur les arbres supérieurs 9. Chaque tournant 5, 6 peut ainsi être actionné indépendamment, par pivotement d'un quart de tour de la poignée ou du volant d'actionnement, entre une position de passage du fluide (figure 6) dans laquelle le trou cylindrique 7 du tournant 5, 6 s'étend dans le prolongement du canal 4, et une position d'obturation (non représentée) dans laquelle le trou cylindrique 7 du tournant 5, 6 s'étend perpendiculairement au canal 4.

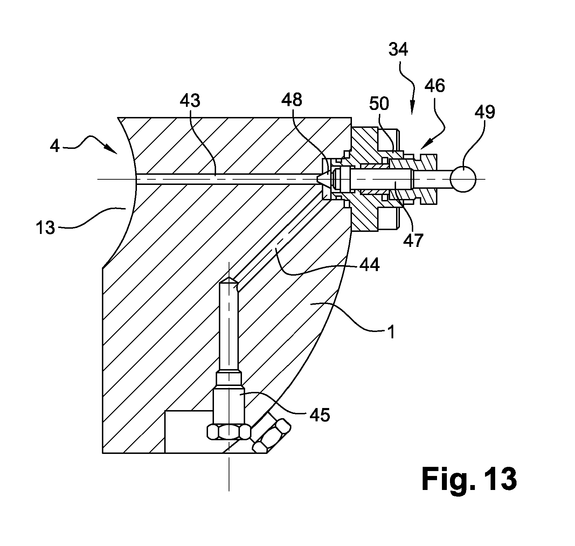

Le robinet comporte en outre des moyens de purge 34 (figure 13), débouchant, d'une part, dans la section 13 du canal 4 de passage de fluide située entre les tournants sphériques amont et aval 5, 6 et, d'autre part, au niveau de la surface externe du corps 1. Ces moyens de purge 34 seront mieux décrits ci-après, en référence à la figure 13.

Comme indiqué précédemment, chaque tournant 5, 6 est en outre équipé d'au moins un siège 14, 16, 17 se présentant sous la forme d'une bague logée dans le corps 1 et dont la paroi interne s'étend sensiblement dans le prolongement du canal 4. Les sièges 14, 16, 17 sont montés mobiles en translation suivant l'axe longitudinal, par rapport au corps 1. Chaque siège 14, 16, 17 comporte une extrémité soumise à l'effort de ressorts de rappel 18, et une autre extrémité venant en appui étanche contre la surface externe 8 du tournant correspondant 5, 6.

Plus particulièrement, le tournant amont 5 est équipé d'un siège amont 14 de type « Simple Piston Effect » et est dépourvu de siège aval, le tournant aval 6 étant équipé d'un siège amont 16 de type « Simple Piston Effect » et d'un siège aval 17 de type « Double Piston Effect ».

Lorsque les tournants 5, 6 sont en position ouverte, c'est-à-dire dans la position permettant le passage de fluide au travers du robinet, plus précisément au travers du canal 4, le fluide peut s'écouler librement de l'amont vers l'aval, le fluide étant empêché de s'écouler au travers des différents plans de jonction par des joints d'étanchéité 19.

Dans cette position, un volume mort 20, dans lequel peut être confiné du gaz, est situé à l'extérieur du canal 4, entre le corps 1 et la paroi externe 8 du tournant aval 6.

Lorsque les deux tournants 5, 6 sont en position fermée, c'est-à-dire en position d'obturation, le robinet comporte un premier volume mort 13 formé dans le canal 4 de passage de fluide, entre les surfaces externes 8 des tournants amont et aval 5, 6. Celui-ci est également relié au volume mort formé par le volume 20 externe au canal 4, situé entre la paroi externe 8 du tournant amont 14 et le corps 1, et au volume interne 7 du tournant amont 14 qui, en position fermée du tournant amont 14, communique avec le volume externe 20 précité.

Un deuxième volume mort est formé par le volume 20 externe au canal précité 4, situé entre la paroi externe 8 du tournant aval 6 et le corps 1. Le deuxième volume mort comporte également le volume interne 7 du tournant aval 6 qui, en position fermée du tournant aval 6, communique avec le volume externe 20 précité.

En cas de surpression à l'intérieur des volumes morts, en particulier en cas de feu, les sièges amont 14, 16 se décollent des tournants amont et aval 5, 6, le siège aval 17 restant plaqué contre le tournant aval 6. De cette manière, le fluide sous pression contenu dans les volumes morts 7, 13, 20 peut s'échapper vers l'amont, par exemple en direction d'une cuve, aucun fluide ne pouvant normalement s'écouler en aval du tournant aval 6. On s'assure ainsi que du fluide, tel par exemple que du gaz, ne vienne alimenter le feu.

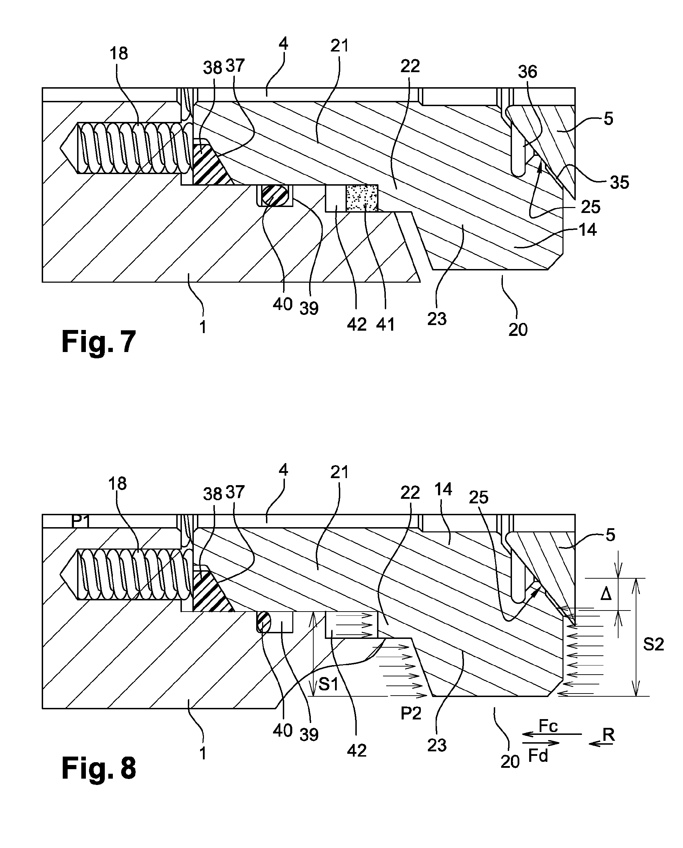

La figure 7 est une vue de détail représentant la structure du siège amont 14 équipant le tournant amont 5. Ce siège 14 comporte, de l'amont vers l'aval, une première partie cylindrique 21, une seconde partie cylindrique 22 de diamètre supérieur à celui de la première partie 21, et une troisième partie cylindrique 23 de diamètre supérieur à celui de la seconde partie 22. La face d'extrémité aval du siège amont 14 comporte une portion tronconique 25 (ou en forme de portion de sphère), bordée par des dégagements annulaires amont et aval 35, 36. La portion tronconique 25 est destinée à venir en contact de manière étanche contre le tournant amont 5 et est recouverte, au moins en partie, d'une couche de carbure de tungstène.

Des ressorts 18 montés dans des logements du corps 1 viennent en appui contre l'extrémité amont du siège amont 14. Les ressorts 18 exercent des efforts orientés longitudinalement, de façon à plaquer le siège amont 14 contre le tournant amont 5.

Un évidement annulaire 37 est ménagé à l'extrémité amont du siège amont 14, cet évidement débouchant vers l'amont et radialement vers l'extérieur. Un joint 38, par exemple en PTFE, est monté dans cet évidement 37.

Une gorge annulaire 39 est ménagée dans le corps, en regard de la première partie 21 du siège 14, et sert au logement d'un joint torique 40 assurant l'étanchéité entre le siège 14 et le corps 1. Le joint 40 est par exemple réalisé dans un matériau du type de celui connu sous la référence Viton AED.

Un autre joint 41, par exemple en graphite, est monté autour de la première partie 21 du siège amont 14 et en aval de la gorge 39 précitée, dans un espace annulaire 42 délimité entre la surface externe de la première partie 21 du siège 14 et une surface interne cylindrique du corps 1, de diamètre sensiblement identique à celui de la deuxième partie 22 du siège 14. Ce joint 41 est conçu pour limiter l'écoulement de fluide vers l'amont mais n'assure pas l'étanchéité complète entre le siège 14 et le corps 1, cette étanchéité étant assurée par le joint torique 40 monté dans la gorge 39.

Le fonctionnement de ce siège 14 de type « Simple Piston Effect » va maintenant être décrit en référence à la figure 8. Dans cette figure, certains éléments non fonctionnels ont été retirés, partiellement ou totalement, afin de faciliter la compréhension. C'est ainsi notamment que le joint 41, qui n'assure pas une étanchéité totale, a été retiré.

Le fonctionnement du siège amont 14 du tournant amont 5 est similaire à celui des sièges de la figure 2.

On supposera que le fluide contenu dans le premier volume mort (7, 13, 20 lorsque les deux tournants sont en position fermée) est soumis à une surpression P2, par exemple en cas de feu. La pression P2 dans ce volume mort 7, 13, 20 est donc supérieure à celle P1 à l'intérieur du canal 4 de passage de fluide.

Compte tenu de la position du joint torique 40, de celle de la portion tronconique 25 et du caractère non étanche du joint 41, le fluide issu du volume mort 7, 13, 20 à la pression P2 pénètre dans les espaces annulaires ménagés entre le siège amont 14 et le tournant amont 5 et entre le siège amont 14 et le corps 1. En particulier, le fluide pénètre dans l'espace annulaire 42 et dans la gorge 39.

Comme précédemment, on désigne par première surface, la ou les surfaces du siège amont 14 soumises à la pression P2 du fluide, directement ou indirectement (par exemple par l'intermédiaire du joint 41), et tournées du côté opposé au tournant sphérique 5, et par seconde surface, la ou les surfaces du siège amont 14 soumises à la pression P2, directement ou indirectement, et tournées du côté du tournant sphérique 5.

La pression P2 s'exerçant sur la première surface génère un effort Fc orienté suivant l'axe longitudinal A et tendant à plaquer le siège aval contre le tournant sphérique alors qu'au contraire, la pression P2 s'exerçant sur la seconde surface génère un effort Fd orienté suivant l'axe A et tendant à décoller le siège amont 14 du tournant sphérique 5.

Or, pour le siège amont 14 des figures 7 et 8, la projection S1 de la première surface sur le plan perpendiculaire à l'axe A est inférieure à celle S2 de la seconde surface, de sorte que la valeur (norme du vecteur) de l'effort Fc est inférieure à celle de l'effort Fd, la force résultante R étant dirigée de l'aval vers l'amont.

En d'autres termes, du fait de la géométrie particulière du siège amont 14, la pression P2 s'exerçant sur les première et seconde surfaces tend à écarter le siège amont 14 du tournant sphérique amont 5.

On rappelle que la pression P2 est largement supérieure à la pression P1, de sorte que l'effet de la pression P1 sur le siège amont 14 est négligeable.

Ainsi, comme indiqué précédemment, lorsque le tournant 5 est fermé, ce siège amont 14, de type « Simple Piston Effect », s'ouvre en cas de surpression dans le volume mort 7, 13, 20 par rapport à la pression à l'intérieur du canal 4 de passage de fluide, de manière à laisser s'échapper le fluide du volume mort 7, 13, 20 vers ledit canal 4.

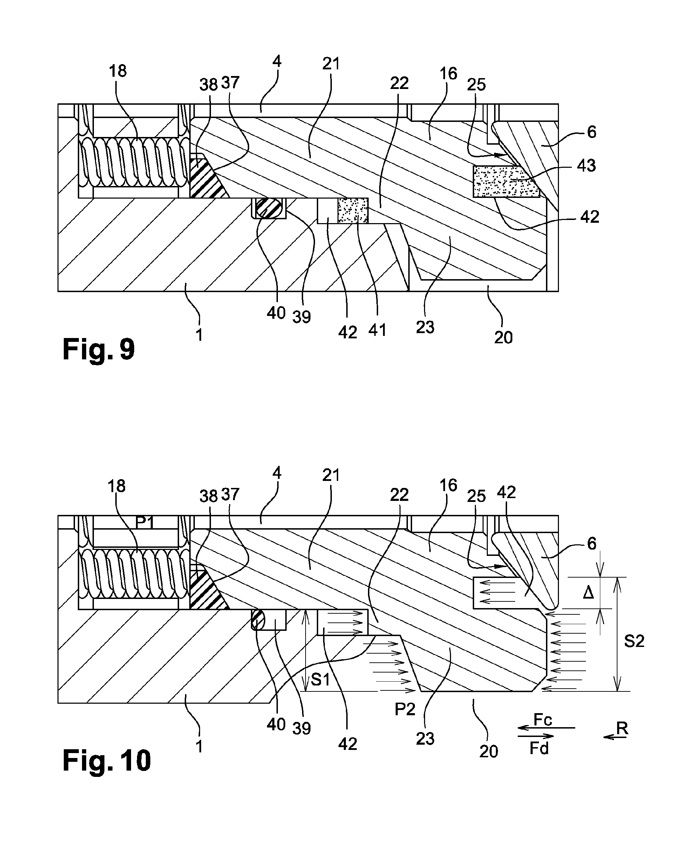

Les figures 9 et 10 sont des vues de détail correspondant respectivement aux figures 7 et 8 et illustrant respectivement la structure du siège amont 16 équipant le tournant aval 6 ainsi que le fonctionnement de ce siège amont 16.

La structure du siège amont 16 équipant le tournant aval 6 est similaire à celle du siège amont 14 équipant le tournant amont 5, seules les différences entre ces deux sièges 14, 16 étant détaillées dans ce qui suit.

La face avant du siège amont 16 équipant le tournant aval 6 comporte une portion tronconique 25 (ou en portion de sphère) dans laquelle est ménagée une gorge annulaire 42 servant au logement d'un insert 43 réalisé par exemple dans un polymère tel que celui connu sous la référence DEVLON.

Cet insert 43 est légèrement en saillie par rapport à la portion tronconique 25, l'appui étanche du siège amont 16 sur le tournant aval 6 étant réalisé par cet insert 43. La portion tronconique 25 est toutefois apte à venir en contact de manière étanche contre le tournant aval 6, en cas de dégradation de l'insert 43, en particulier en cas de feu.

La figure 10 illustre le comportement de ce siège 16 en cas de surpression à l'intérieur du deuxième volume mort 20. On supposera par exemple que l'insert 43 a disparu sous l'effet de la température élevée due à un feu. On notera que le joint 41, s'il est réalisé en graphite, résiste à de très fortes températures. Le joint 40 n'est pas non plus dégradé, compte tenu du fait qu'il est protégé dans une gorge 39 et est séparé des zones à haute température par des épaisseurs de matière conséquentes.

Le comportement de ce siège 16 est identique à celui du siège amont 14 équipant le tournant amont 5 : la pression P2 s'exerçant sur la première surface génère un effort Fc orienté suivant l'axe longitudinal A et tendant à plaquer le siège amont 16 contre le tournant sphérique 6 alors que, au contraire, la pression P2 s'exerçant sur la seconde surface générant un effort Fd orienté suivant l'axe A et tendant à décoller le siège amont 16 du tournant sphérique 6.

Pour le siège amont des figures 9 et 10, la projection S1 de la première surface sur le plan perpendiculaire à l'axe A est inférieure à celle S2 de la seconde surface de sorte que la valeur (norme du vecteur) de l'effort Fc est inférieure à celle de l'effort Fd, la force résultante R étant dirigée de l'aval vers l'amont.

En d'autres termes, du fait de la géométrie particulière du siège amont 16, la pression P2 s'exerçant sur les première et seconde surfaces tend à écarter le siège amont 16 du tournant aval 6.

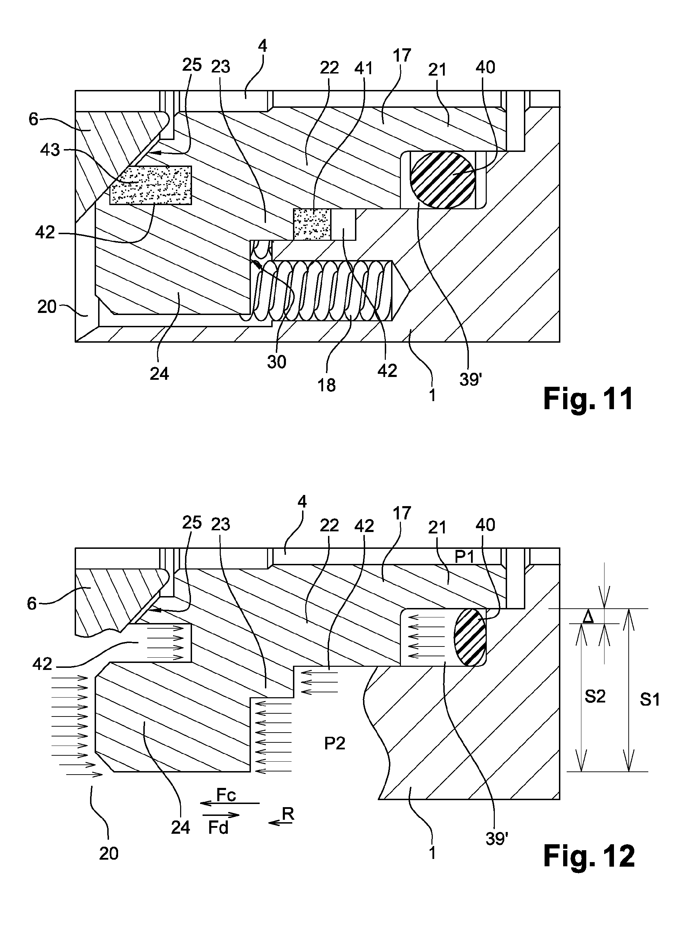

Les figures 11 et 12 sont des vues de détail illustrant respectivement la structure du siège aval 17 équipant le tournant aval 6 ainsi que le fonctionnement de ce siège aval 17.

Ce siège aval 17 comporte, de l'aval vers l'amont, une première partie cylindrique 21, une seconde partie cylindrique 22 de diamètre supérieur à celui de la première partie 21, une troisième partie cylindrique 23 de diamètre supérieur à celui de la seconde partie 22, et une quatrième partie cylindrique 24 de diamètre supérieur à celui de la troisième partie 23. La face d'extrémité amont du siège aval comporte une portion tronconique 25 (ou en forme de portion de sphère), dans laquelle est ménagée une gorge 42 logeant un insert 43 similaire à celui des figures 9 et 10, réalisé par exemple dans un polymère tel que celui connu sous la référence DEVLON.

Comme précédemment, cet insert 43 est légèrement en saillie par rapport à la portion tronconique 25, l'appui étanche du siège aval 17 sur le tournant aval 6 étant réalisé par cet insert 43. La portion tronconique 25 est toutefois apte à venir en contact de manière étanche contre le tournant aval 6, en cas de dégradation de l'insert 43, en particulier en cas de feu.

Un joint torique 40, par exemple réalisé dans un matériau du type de celui connu sous la référence Viton AED, est monté autour de la première partie 21 du siège 17, dans un espace annulaire 39' délimité entre la surface externe de la première partie 21 du siège 17 et une surface interne cylindrique du corps 1, de diamètre sensiblement identique à celui de la deuxième partie 22 du siège 17.

Ce joint torique 40 assure l'étanchéité entre le siège aval 17 et le corps 1.

Un autre joint 41, par exemple en graphite, est monté autour de la seconde partie 22 du siège 17, dans un espace annulaire 42 délimité entre la surface externe de la seconde partie 22 du siège 17 et une surface interne cylindrique du corps 1, de diamètre sensiblement identique à celui de la troisième partie 23 du siège 17. Ce joint 41 est conçu pour limiter l'écoulement de fluide vers l'aval mais n'assure pas l'étanchéité complète entre le siège 17 et le corps 1, cette étanchéité étant assurée par le joint torique 40 précité.

La face aval de la quatrième partie 24 forme un épaulement 30 contre lequel viennent s'appuyer des ressorts 18 montés dans des logements du corps 1. Les ressorts 18 exercent des efforts orientés longitudinalement, de façon à plaquer le siège aval 17 contre le tournant aval 6.

Le fonctionnement de ce siège 17 de type « Double Piston Effect » va maintenant être décrit en référence à la figure 12. Dans cette figure, certains éléments non fonctionnels ont été retirés, partiellement ou totalement, afin de faciliter la compréhension.

Le fonctionnement du siège aval du tournant aval 6 est similaire à celui des sièges de la figure 3.

On supposera que le fluide contenu dans le second volume mort 20 est soumis à une surpression P2, par exemple due à une exposition à un feu. La pression P2 dans ce volume mort est donc supérieure à celle P1 à l'intérieur du canal 4 de passage de fluide.

On supposera également que l'insert 43 a disparu sous l'effet de la température élevée due au feu. On notera que le joint 41, s'il est réalisé en graphite, résiste à de très fortes températures. Le joint 40 n'est pas non plus dégradé, compte tenu du fait qu'il est protégé dans l'espace annulaire 39' et est séparé des zones à haute température par des épaisseurs de matière conséquentes.

Compte tenu de la position du joint torique 40, de celle de la portion tronconique 25 et du caractère non étanche du joint 41, le fluide issu du volume mort à la pression P2 pénètre dans les espaces annulaires ménagés entre le siège aval et le tournant aval et entre le siège aval et le corps. En particulier, le fluide pénètre dans les espaces annulaires 39' et 42.

Comme précédemment, on désigne par première surface, la ou les surfaces du siège aval 17 soumises à la pression P2 du fluide, directement ou indirectement (par exemple par l'intermédiaire du joint graphite 41), et tournées du côté opposé au tournant sphérique 6, et par seconde surface, la ou les surfaces du siège aval 17 soumises à la pression P2, directement ou indirectement, et tournées du côté du tournant sphérique 6.

La pression P2 s'exerçant sur la première surface génère un effort Fc orienté suivant l'axe longitudinal A et tendant à plaquer le siège aval 17 contre le tournant sphérique 6 alors que, au contraire, la pression P2 s'exerçant sur la seconde surface génère un effort Fd orienté suivant l'axe A et tendant à décoller le siège aval 17 du tournant sphérique 6.

Or, pour le siège aval 17 des figures 11 et 12, la projection de la première surface sur le plan perpendiculaire à l'axe A est supérieure à celle de la seconde surface de sorte que la valeur (norme du vecteur) de l'effort Fc est supérieure à celle de l'effort Fd, la force résultante R étant dirigée de l'aval vers l'amont.

En d'autres termes, du fait de la géométrie particulière du siège aval 17, la pression P2 s'exerçant sur les première et seconde surfaces tend à plaquer le siège aval 17 sur le tournant sphérique aval 6.

On rappelle que la pression P2 est largement supérieure à la pression P1, de sorte que l'effet de la pression P1 sur le siège aval 17 est négligeable.

Ainsi, comme indiqué précédemment, ce siège aval 17, de type « Double Piston Effect », ne s'ouvre pas, même en cas de surpression dans le volume mort, de manière à éviter tout écoulement de fluide vers l'aval.

La figure 13 illustre les moyens de purge 34 montés entre les deux tournants 5, 6 du robinet selon l'invention. Ces moyens 34 comportent un premier canal de purge 43, ménagé dans le corps et débouchant radialement dans le canal 4 de passage de fluide, dans la zone 13 située entre les tournants amont et aval 5, 6. Le premier canal de purge 43 est relié fluidiquement à une première extrémité d'un second canal de purge 44, ménagé dans le corps 1. La seconde extrémité du second canal 44 débouche au niveau de la surface externe du corps 1, par l'intermédiaire de moyens de raccordement usuels 45.

Un obturateur 46 est monté au niveau de la jonction entre les premier et second canaux de purge 43, 44. Il comporte une tige radiale 47 dont une première extrémité porte une tête conique 48, venant s'insérer dans l'extrémité correspondante du premier canal 43 de façon à l'obturer, et dont une seconde extrémité comporte des moyens d'actionnement 49. La tige 47 comporte un filetage coopérant avec un taraudage d'un écrou 50 fixé sur le corps 1. La tige, et donc la tête conique, est mobile entre une position d'obturation représentée à la figure 13, dans laquelle la tête 48 est en appui sur l'extrémité correspondante du premier canal 43, et une position de purge (non représentée), dans laquelle la tête 48 est dégagée de cette extrémité du premier canal 43. De tels obturateurs 34 sont connus de l'art antérieur.

L'invention propose ainsi un robinet de type « Double Block and Bleed » permettant de garantir de façon simple et fiable, l'étanchéité vers l'aval, même en cas de feu.

## Revendications

1. Robinet d'isolement comportant un corps (1) comprenant un canal (4) de passage de fluide, destiné à être obturé par des tournants sphériques amont et aval (5, 6), actionnables indépendamment l'un de l'autre entre des positions de passage du fluide au travers dudit canal (4) et des positions d'obturation du canal (4), et des moyens de vérification d'étanchéité (34), débouchant dans ledit canal (4) et entre les deux tournants sphériques (5, 6), les tournants sphériques (5, 6) étant équipés de sièges (14, 16, 17) associés à des moyens de rappel élastique (18) de façon à venir en appui étanche contre les tournants sphériques (5 , 6) autour dudit canal (4), un volume mort (20) étant délimité entre la paroi externe de chaque tournant sphérique (5, 6) et le corps (1), à l'extérieur du canal (4) de passage de fluide, chaque siège (14, 16, 17) étant destiné à être soumis d'une part à la pression du fluide situé dans ledit canal (4) et, d'autre part, à la pression du fluide contenu dans le volume mort (20), **caractérisé en ce que** le tournant sphérique amont (5) est équipé d'un siège amont (14) et est dépourvu de siège aval, le tournant sphérique aval (6) étant équipé d'un siège amont (16) et d'un siège aval (17), les sièges amont (14, 16) étant aptes à s'écarter des tournants sphériques (5, 6) en cas de surpression à l'intérieur des volumes morts (20) correspondants, le siège aval (17) étant conçu pour rester en appui étanche sur le tournant sphérique aval (6) en cas de surpression à l'intérieur du volume mort correspondant (20).

2. Robinet selon la revendication 1, **caractérisé en ce que** le siège amont (14) du tournant amont (5) comporte une surface annulaire en portion de sphère ou tronconique (25), destinée à venir en contact de manière étanche avec le tournant amont (5) et recouverte, au moins en partie, d'une couche de carbure de tungstène.

3. Robinet selon la revendication 1 ou 2, **caractérisé en ce que** le siège amont (16) et/ou le siège aval (17) du tournant aval (6) comportent des inserts annulaires (43) destinés à venir en appui de manière étanche contre le tournant aval (6).

4. Robinet selon la revendication 3, **caractérisé en ce que** le siège amont (16) et/ou le siège aval (17) du tournant aval (6) comportent en outre une surface annulaire en portion de sphère ou tronconique (25), apte à venir en contact de manière étanche avec le tournant aval (6), en cas de dégradation des inserts (43).

5. Robinet selon l'une des revendications 1 à 4, **caractérisé en ce que** les sièges amont (14, 16) des tournants amont et aval (5, 6) sont mobiles en translation par rapport au corps (1) le long d'un axe longitudinal (A), chaque siège amont (14, 16) comportant une première et une seconde surfaces, tournées respectivement du côté opposé au tournant (5, 6) et du côté du tournant (5, 6), destinées à être soumises à la pression du fluide du volume mort (20) de sorte que cette pression s'appliquant sur la première surface tend à appliquer (Fc) le siège amont (14, 16) sur le tournant (5, 6) et que cette pression s'appliquant sur la seconde surface tend à décoller (Fd) le siège amont (14, 16) du tournant (5, 6), la projection de la seconde surface sur un plan perpendiculaire à l'axe longitudinal (A) étant plus importante que la projection de la première surface sur ledit plan perpendiculaire, de sorte que l'effort résultant (R) appliqué par la pression du fluide du volume mort (20) sur le siège amont (14, 16) tend à le décoller du tournant correspondant (5, 6).

6. Robinet selon l'une des revendications 1 à 5, **caractérisé en ce que** le siège aval (17) du tournant aval (6) est mobile en translation par rapport au corps, le long d'un axe longitudinal (A) et comporte une première et une seconde surfaces, tournées respectivement du côté opposé au tournant aval (6) et du côté du tournant aval (6), destinées à être soumises à la pression du fluide du volume mort (20) de sorte que cette pression s'appliquant sur la première surface tend à appliquer (Fc) le siège aval (17) sur le tournant aval (6) et que cette pression s'appliquant sur la seconde surface tend à décoller (Fd) le siège aval (17) du tournant aval (6), la projection de la première surface sur un plan perpendiculaire à l'axe longitudinal (A) étant plus importante que celle de la seconde surface de sorte que l'effort résultant (R) appliqué par la pression du fluide du volume mort (20) sur le siège aval (17) tend à le plaquer contre le tournant aval (6).

7. Robinet selon l'une des revendications 1 à 6, **caractérisé en ce qu'**il comporte au moins un joint annulaire (40) assurant l'étanchéité entre chaque siège amont (14, 16) et le corps, le joint (40) étant logé dans une gorge annulaire (39) du corps (1) ou du siège amont (14, 16).

8. Robinet selon l'une des revendications 1 à 7, **caractérisé en ce qu'**il comporte au moins un joint annulaire (40) assurant l'étanchéité entre le siège aval (17) du tournant aval (6) et le corps (1), le joint (40) étant monté dans un espace annulaire (39') délimité entre une paroi externe cylindrique du siège (17) et une paroi interne cylindrique du corps (1), de plus grand diamètre que la paroi externe du siège aval (17).

9. Robinet selon l'une des revendications 1 à 8, **caractérisé en ce que** les moyens de vérification d'étanchéité comportent des moyens de purge (34) débouchant dans la section du canal (4) de passage de fluide située entre les tournants sphériques amont et aval (5, 6).

10. Cuve de stockage de gaz, notamment de gaz liquéfié, comportant une conduite d'extraction du gaz contenu dans la cuve, **caractérisé en ce que** la conduite d'extraction comporte un robinet selon l'une des revendications 1 à 9.

## Patentansprüche

1. Absperrventil, welches aufweist:
- einen Körper (1), der einen Fluiddurchflusskanal (4) umfasst, der dazu bestimmt ist, von einer stromaufwärtigen und einer stromabwärtigen Ventilkugel (5, 6) verschlossen zu werden, die unabhängig voneinander zwischen Positionen des Durchflusses des Fluids durch den Kanal (4) und Positionen des Verschlusses des Kanals (4) betätigbar sind,
- und Mittel zur Dichtigkeitsüberprüfung (34), die in den Kanal (4) und zwischen den zwei Ventilkugeln (5, 6) münden,
- wobei die Ventilkugeln (5, 6) mit Sitzen (14, 16, 17) ausgestattet sind, die mit elastischen Rückholmitteln (18) verbunden sind, so dass sie an den Ventilkugeln (5, 6) um den Kanal (4) herum dicht zur Anlage kommen,
- wobei ein Totvolumen (20) zwischen der Außenwand jeder Ventilkugel (5, 6) und dem Körper (1) außerhalb des Fluiddurchflusskanals 4) begrenzt wird,
- wobei jeder Sitz (14, 16, 17) dazu bestimmt ist, einerseits dem Druck des in dem Kanal (4) befindlichen Fluids und andererseits dem Druck des in dem Totvolumen (20) enthaltenen Fluids ausgesetzt zu werden,
**dadurch gekennzeichnet, dass** die stromaufwärtige Ventilkugel (5) mit einem stromaufwärtigen Sitz (14) ausgestattet ist und nicht mit einem stromabwärtigen Sitz versehen ist, während die stromabwärtige Ventilkugel (6) mit einem stromaufwärtigen Sitz (16) und mit einem stromabwärtigen Sitz (17) ausgestattet ist, wobei die stromaufwärtigen Sitze (14, 16) geeignet sind, sich im Falle eines Überdrucks im Inneren der entsprechenden Totvolumina (20) von den Ventilkugeln (5, 6) zu entfernen, während der stromabwärtige Sitz (17) dafür ausgebildet ist, im Falle eines Überdrucks im Inneren des entsprechenden Totvolumens (20) in dichter Anlage an der Ventilkugel (6) zu verbleiben.

2. Ventil nach Anspruch 1, **dadurch gekennzeichnet, dass** der stromaufwärtige Sitz (14) der stromaufwärtigen Ventilkugel (5) eine Ringfläche in Form eines Kugelabschnitts oder kegelstumpfförmigen Abschnitts (25) aufweist, die dazu bestimmt ist, mit der stromaufwärtigen Ventilkugel (5) in dichten Kontakt zu kommen, und wenigstens teilweise von einer Schicht aus Wolframcarbid bedeckt ist.

3. Ventil nach Anspruch 1 oder 2, **dadurch gekennzeichnet, dass** der stromaufwärtige Sitz (16) und/oder der stromabwärtige Sitz (17) der stromabwärtigen Ventilkugel (6) ringförmige Einsätze (43) aufweisen, die dazu bestimmt sind, an der stromabwärtigen Ventilkugel (6) dicht zur Anlage zu kommen.

4. Ventil nach Anspruch 3, **dadurch gekennzeichnet, dass** der stromaufwärtige Sitz (16) und/oder der stromabwärtige Sitz (17) der stromabwärtigen Ventilkugel (6) außerdem eine Ringfläche in Form eines Kugelabschnitts oder kegelstumpfförmigen Abschnitts (25) aufweisen, die geeignet ist, im Falle einer Beschädigung der Einsätze (43) mit der stromabwärtigen Ventilkugel (6) in dichten Kontakt zu kommen.

5. Ventil nach einem der Ansprüche 1 bis 4, **dadurch gekennzeichnet, dass**:
- die stromaufwärtigen Sitze (14, 16) der stromaufwärtigen und der stromabwärtigen Ventilkugel (5, 6) bezüglich des Körpers (1) entlang einer Längsachse (A) translatorisch beweglich sind,
- wobei jeder stromaufwärtige Sitz (14, 16) eine erste und eine zweite Fläche aufweist, die von der Ventilkugel (5, 6) abgewandt bzw. der Ventilkugel (5, 6) zugewandt sind und dazu bestimmt sind, dem Druck des Fluids des Totvolumens (20) ausgesetzt zu werden, derart, dass dieser Druck, wenn er auf die erste Fläche ausgeübt wird, bestrebt ist, den stromaufwärtigen Sitz (14, 16) auf die Ventilkugel (5, 6) zu drücken (Fc), und dass dieser Druck, wenn er auf die zweite Fläche ausgeübt wird, bestrebt ist, den stromaufwärtigen Sitz (14, 16) von der Ventilkugel (5, 6) zu lösen (Fd),
- wobei die Projektion der zweiten Fläche auf eine zur Längsachse (A) senkrechte Ebene größer als die Projektion der ersten Fläche auf diese senkrechte Ebene ist, so dass die resultierende Kraft (R), die durch den Druck des Fluids des Totvolumens (20) auf den stromaufwärtigen Sitz (14, 16) ausgeübt wird, bestrebt ist, ihn von der entsprechenden Ventilkugel (5, 6) zu lösen.

6. Ventil nach einem der Ansprüche 1 bis 5, **dadurch gekennzeichnet, dass** der stromabwärtige Sitz (17) der stromabwärtigen Ventilkugel (6) bezüglich des Körpers entlang einer Längsachse (A) translatorisch beweglich ist und eine erste und eine zweite Fläche aufweist, die von der stromabwärtigen Ventilkugel (6) abgewandt bzw. der stromabwärtigen Ventilkugel (6) zugewandt sind und dazu bestimmt sind, dem Druck des Fluids des Totvolumens (20) ausgesetzt zu werden, derart, dass dieser Druck, wenn er auf die erste Fläche ausgeübt wird, bestrebt ist, den stromabwärtigen Sitz (17) auf die stromabwärtige Ventilkugel (6) zu drücken (Fc), und dass dieser Druck, wenn er auf die zweite Fläche ausgeübt wird, bestrebt ist, den stromabwärtigen Sitz (17) von der stromabwärtigen Ventilkugel (6) zu lösen (Fd), wobei die Projektion der ersten Fläche auf eine zur Längsachse (A) senkrechte Ebene größer als diejenige der zweiten Fläche ist, so dass die resultierende Kraft (R), die durch den Druck des Fluids des Totvolumens (20) auf den stromabwärtigen Sitz (17) ausgeübt wird, bestrebt ist, ihn gegen die stromabwärtige Ventilkugel (6) zu drücken.

7. Ventil nach einem der Ansprüche 1 bis 6, **dadurch gekennzeichnet, dass** es wenigstens eine Ringdichtung (40) aufweist, welche die Dichtigkeit zwischen dem jeweiligen stromaufwärtigen Sitz (14, 16) und dem Körper sicherstellt, wobei die Dichtung (40) in einer Ringnut (39) des Körpers (1) oder des stromaufwärtigen Sitzes (14, 16) aufgenommen ist.

8. Ventil nach einem der Ansprüche 1 bis 7, **dadurch gekennzeichnet, dass** es wenigstens eine Ringdichtung (40) aufweist, welche die Dichtigkeit zwischen dem stromabwärtigen Sitz (17) der stromabwärtigen Ventilkugel (6) und dem Körper (1) sicherstellt, wobei die Dichtung (40) in einem Ringraum (39') angebracht ist, der zwischen einer zylindrischen Außenwand des Sitzes (17) und einer zylindrischen Innenwand des Körpers (1), die einen größeren Durchmesser als die Außenwand des stromabwärtigen Sitzes (17) hat, begrenzt ist.

9. Ventil nach einem der Ansprüche 1 bis 8, **dadurch gekennzeichnet, dass** die Mittel zur Dichtigkeitsüberprüfung Spülmittel (34) aufweisen, die in den Abschnitt des Fluiddurchflusskanals (4) münden, der sich zwischen der stromaufwärtigen und der stromabwärtigen Ventilkugel (5, 6) befindet.

10. Gasspeichertank, insbesondere für Flüssiggas, der eine in dem Tank enthaltene Gasentnahmeleitung aufweist, **dadurch gekennzeichnet, dass** die Entnahmeleitung ein Ventil nach einem der Ansprüche 1 bis 9 aufweist.

## Claims

1. An isolation valve comprising a body (1) including a fluid flow channel (4), designed to be closed by upstream and downstream spherical plugs (5, 6) which can be actuated independently of one another between positions for fluid flow through said channel (4) and closing positions of the channel (4), and sealing checking means (34), leading into said channel (4) and between the two spherical plugs (5, 6), the spherical plugs (5, 6) being equipped with seats (14, 16, 17) associated with elastic return means (18) so as to come to bear sealingly against the spherical plugs (5, 6) around said channel (4), a dead volume (20) being defined between the outer wall of each spherical plug (5, 6) and the body (1), outside of the fluid flow channel (4), each seat (14, 16, 17) being designed to be subjected to the pressure of the fluid located inside said channel (4) and, on the other hand, to the pressure of the fluid contained in the dead volume (20), **characterized in that** the upstream spherical plug (5) is equipped with an upstream seat (14) and has no downstream seat, the downstream spherical plug (6) being equipped with an upstream seat (16) and a downstream seat (17), the upstream seats (14, 16) being able to separate from the spherical plugs (5, 6) in the event of overpressure inside the corresponding dead volumes (20), the downstream seat (17) being designed to remain to bear sealingly against on the downstream spherical plug (6) in the event of overpressure inside the corresponding dead volume (20).

2. The valve according to claim 1, **characterized in that** the upstream seat (14) of the upstream plug (5) comprises an annular spherical segment or frusto-conical surface (25) designed to come into sealing contact with the upstream plug (5) and covered, at least in part, with a layer of tungsten carbide.

3. The valve according to claim 1 or 2, **characterized in that** the upstream seat (16) and/or the downstream seat (17) of the downstream plug (6) comprise annular inserts (43) designed to come to bear sealingly against the downstream plug (6).

4. The valve according to claim 3, **characterized in that** the upstream seat (16) and/or the downstream seat (17) of the downstream plug (6) further comprise an annular spherical segment or frusto-conical surface (25), capable of coming into sealing contact with the downstream plug (6), in the event of deterioration of the inserts (43).

5. The valve according to one of claims 1 to 4, **characterized in that** the upstream seats (14, 16) of the upstream and downstream plugs (5, 6) are movable in translation relative to the body (1), along a longitudinal axis (A), each upstream seat (14, 16) comprising a first and a second surfaces, respectively oriented in the direction opposite the plug (5, 6) and toward the plug (5, 6), designed to be subjected to the pressure of the fluid in the dead volume (20) so that this pressure, applied to the first surface, tends to apply (Fc) the upstream seat (14, 16) onto the plug (5, 6) and this pressure, applied to the second surface, tends to detach (Fd) the upstream seat (14, 16) from the plug (5, 6), the projection of the second surface onto a plane perpendicular to the longitudinal axis (A) being greater than the projection of the first surface onto said perpendicular plane, so that the resulting force (R) applied by the pressure of the fluid in the dead volume (20) onto the upstream seat (14, 16) tends to detach it from the corresponding plug (5,6).

6. The valve according to one of claims 1 to 5, **characterized in that** the downstream seat (17) of the downstream plug (6) is movable in translation relative to the body, along a longitudinal axis (A) and comprises a first and a second surfaces, oriented respectively in the direction opposite to the downstream plug (6) and toward the downstream plug (6), designed to be subjected to the pressure of the fluid in the dead volume (20) so that said pressure applied to the first surface tends to apply (Fc) the downstream seat (17) onto the downstream plug (6) and said pressure applied to the second surface tends to detach (Fd) the downstream seat (17) from the downstream plug (6), the projection of the first surface onto a plane perpendicular to the longitudinal axis (A) being greater than that of the second surface so that the resulting force (R) applied by the pressure of the fluid in the dead volume (20) to the downstream seat (17) tends to press it against the downstream plug (6).

7. The valve according to one of claims 1 to 6, **characterized in that** it comprises at least one annular seal (40) providing the sealing between each upstream seat (14, 16) and the body, the seal (40) being accommodated in an annular groove (39) of the body (1) or of the upstream seat (14, 16).

8. The valve according to one of claims 1 to 7, **characterized in that** it comprises at least one annular seal (40) providing the sealing between the downstream seat (17) of the downstream plug (6) and the body (1), the seal (40) being mounted in an annular space (39') defined between an outer cylindrical wall of the seat (17) and an inner cylindrical wall of the body (1), having a diameter greater than the outer wall of the downstream seat (17).

9. The valve according to one of claims 1 to 8, **characterized in that** the sealing checking means comprise bleeding means (34) leading into the section of the fluid flow channel (4) located between the upstream and downstream plugs (5, 6)

10. A gas storage tank, particularly for liquefied gas, comprising a pipe for extracting the gas contained in the tank, **characterized in that** the extraction pipe comprises a valve according to one of claims 1 to 9.
